# EUROPEAN PATENT APPLICATION

(11) **EP 2 570 624 A1**
(43) Date of publication of application: **20.03.2013**
(21) Application number: 11780367.6
(22) Date of filing: 09.05.2011
(51) Int. Cl.: F01N 3/02, F01N 3/20, F02M 69/00

(54) **FUEL SPRAY NOZZLE**

(30) Priority: 13.05.2010 JP 2010111011
(71) Applicant: Hino Motors Ltd., Tokyo 191-8660 (JP)
(72) Inventor: TSUMAGARI, Ichiro, Hino-shi Tokyo 191-8660 (JP)
(74) Representative: Louis Pöhlau Lohrentz
(86) International application number: PCT/JP2011/002564
(87) International publication number: WO 2011/142108

(57) **Abstract**

A fuel spray nozzle 16 has a cylindrical spray block 18 with an inner air passage 17 for flow of nebulizing air 4' and a fuel injection valve 20 for injection of fuel intermediately of the inner air passage 17 in the spray block 18 at a flow rate adjusted by duty control. The nebulizing air is introduced into the spray block 18 through a base end of the block at a flow velocity of 9 m/s or more and blown out of an injection port 21 at a tip end of the block.

## Description

### Technical Field

The present invention relates to a fuel spray nozzle.

### Background Art

In a conventional diesel engine, a particular filter is incorporated in an exhaust pipe for flow of an exhaust gas to capture particulates (particulate matters) in the exhaust gas. The particulate filter of this type integrally carries an oxidation catalyst having active species such as Pt or Pd, so that the captured particulates are caused to self-burn even at an minimally low exhaust gas temperature.

However, an amount of captured particulates will exceed an amount of treated particulates in operation areas with low exhaust temperature levels. Continued operation with such low exhaust temperature levels may hinder sufficient regeneration of the particulate filter, resulting in excessive accumulation of the captured particulates in the particulate filter.

Conventionally proposed in this connection is to arrange a combustion appliance for temperature raising of exhaust gas upstream of the particulate filter so as to introduce the exhaust gas produced by burner combustion and raised in temperature by the combustion appliance to the particulate filter and positively raise a catalyst bed temperature of the particulate filter and burn off the captured particulates, thereby regenerating the particulate filter.

There already exist, for example, the following Patent Literatures 1 and 2 as prior art documents on techniques for temperature raising of a particulate filter or the like by use of a burner.

### Citation List

### Patent Literature

[Patent Literature 1] JP 5-086845A
[Patent Literature 2] JP 6-167212A

### Summary of Invention

### Technical Problems

A fuel spray nozzle for an combustion appliance for temperature raising of exhaust gas of this type requires a turn-down ratio (the ratio of maximum to minimum fuel flow rate) of 10 to 20 times, and is required to realize spraying of uniform fine particles. However, a fuel spray nozzle in an existing burner, gas turbine or the like, which employs a fuel flow rate adjusting mechanism through pressure adjustment, has a turn-down ratio of less than 10 times. In cases where a fuel flow rate adjusting mechanism through duty control (PWM control; Pulse Width Modulation control) is employed to realize a turn-down ratio of 10 to 20 times, there is a problem that uniform fine spray cannot be obtained.

Specifically, regeneration of a particulate filter by a combustion appliance requires a bed temperature of the particulate filter to be kept at about 600°C. However, to keep the bed temperature of the particulate filter at about 600°C by means of following a combustion state of the combustion appliance to operating states (rotating speed or load) of a diesel engine is difficult to attain unless the turn-down ratio is about 10 to 20 times since a flow rate and a temperature of exhaust gas change every second depending on the operating states of the diesel engine; a fuel flow rate must be controlled more finely and more accurately.

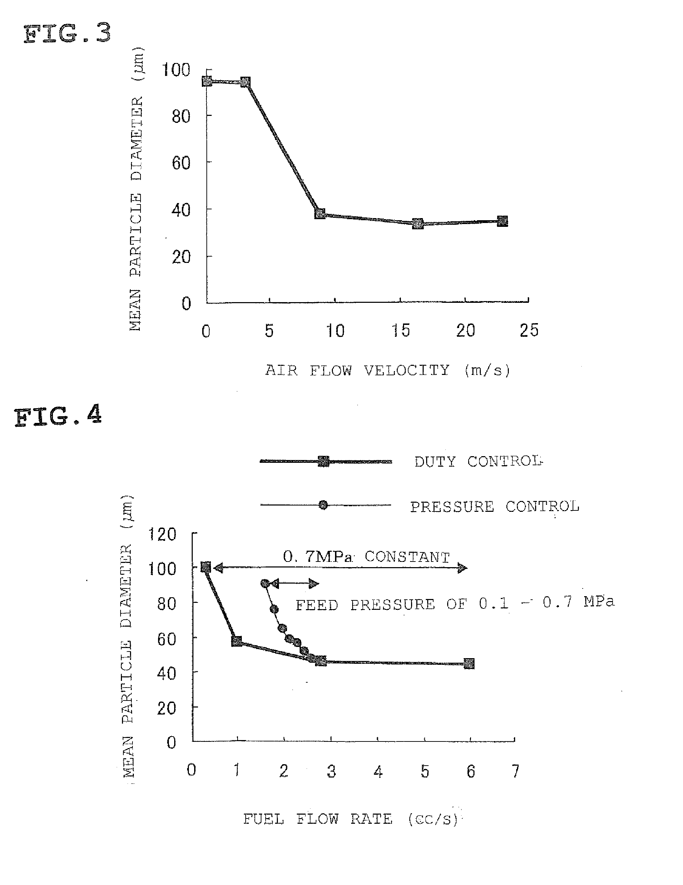

On the other hand, the duty control is the control which keeps fuel at a predetermined pressure and drives a solenoid vale in a predetermined cycle to adjust a fuel flow rate through a ratio of opening and closing times of the solenoid valve in the cycle. As plotted in Fig. 4, employment of such duty control can substantially increase a turn-down ratio in comparison with the fuel flow rate adjustment through pressure control, but brings about roughened particle diameters of sprayed fuel and difficulty in attaining fine spray in particular when a small amount of fuel is injected. As a result, combustibility and ignitability of the fuel may be deteriorated to disadvantageously cause deterioration in fuel efficiency and emission of white smoke.

The invention was made in view of the above and has its object to provide a fuel spray nozzle which can realizes a turn-down ratio of 10 to 20 times and uniform fine spray even when a small amount of fuel is injected.

### Solution to Problems

The invention is directed to a fuel spray nozzle comprising a cylindrical spray block having an inner air passage for flow of nebulizing air and a fuel injection valve for injecting fuel intermediately of the inner air passage in said spray block at a flow rate adjusted by duty control, the nebulizing air being introduced into said spray block through a base end of the block at a flow velocity of 9 m/s or more and blown out of a tip end of the block.

In this manner, fine particles among particles of fuel injected through the fuel injection valve are entrained in the flow of the nebulizing air immediately after the fuel injection and are blown out of the tip end of the spray block. On the other hand, large particles among the particles of the fuel injected through the fuel injection valve substantially collide against an inner wall of the air passage and are atomized through diffusion, and even large particles guided along the inner wall of the air passage to the tip end of the spray block are atomized through scattering such that they are torn off by the flow of the nebulizing air at an edge of an injection port on the tip end of the spray block.

Thus, in the fuel injection control with the flow rate of the fuel injected through the fuel injection valve being adjusted by duty control for the turn-down ratio of 10 to 20 times, uniform fine spray becomes hard to attain and a mean particle diameter becomes increased when an injected amount of fuel is reduced to inject a small amount of fuel; even in such situation, the function of collision against the inner wall of the air passage into diffusion and the function of tear-off at the edge of the injection port on the tip end of the spray block into scattering facilitate atomization of the fuel particles, whereby uniform fine spray can be realized.

In the invention, preferably, configuration is made such that at least part of combustion air may be guided as nebulizing air. Then, the nebulizing air may be provided by using the part of the combustion air without securing a new supply source of nebulizing air, which can substantially reduce a cost for practicing the invention.

### Advantageous Effects of Invention

According to the fuel spray nozzle of the invention, various beneficial effects can be exerted as follows.

(I) The turn-down ratio of 10 to 20 times can be realized by employing the duty control, so that a fuel flow rate can be controlled more finely and more accurately. In addition, uniform fine spray can be realized even when a small amount of fuel is injected, so that combustibility and ignitability of the fuel can be substantially improved to prevent deterioration of fuel efficiency and emission of white smoke.

(II) When configuration is made such the at least part of combustion air may be guided as nebulizing air, nebulizing air can be provided by using the part of combustion air without securing a new supply source of nebulizing air, which can substantially reduce a cost for practicing the invention.

### Brief Description of Drawings

Fig. 1 is a schematic view showing an embodiment of the invention;
Fig. 2 is a sectional view showing details of a fuel spray nozzle arranged in a combustion appliance shown in Fig. 1;
Fig. 3 is a graph showing a relationship between an air flow velocity and a mean particle diameter of nebulizing air; and
Fig. 4 is a graph showing a relationship between an amount of injected fuel and a mean particle diameter.

### Description of Embodiment

An embodiment of the invention will be described with reference to the drawings.

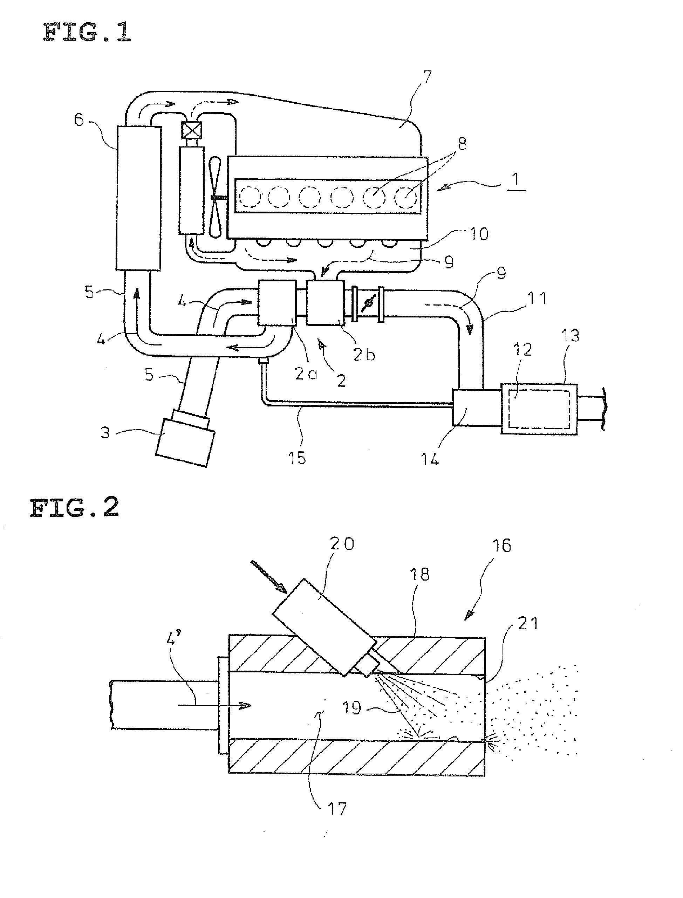

Fig. 1 shows an embodiment of the invention in which reference numeral 1 denotes a diesel engine equipped with a turbocharger 2. Intake air 4 guided from an air cleaner 3 is sent through an intake pipe 5 to a compressor 2a of the turbocharger 2. The intake air 4 pressurized by the compressor 2a is sent to an intercooler 6 and is cooled. The intake air 4 is further guided from the intercooler 6 to an intake manifold 7 and is distributed to cylinders 8 of the diesel engine 1 (an in-line six-cylinder engine is illustrated in Fig. 1). Exhaust gas 9 discharged from each of the cylinders 8 of the diesel engine 1 is sent through an exhaust gas manifold 10 to a turbine 2b of the turbocharger 2, and after driving the turbine 2b, is sent to an exhaust pipe 11.

Incorporated in the exhaust pipe 11 is a particulate filter 12 (exhaust purification member) which integrally supports an oxidation catalyst and is encased by a muffler 13. Arranged in front of the particulate filter 12 is a combustion appliance 14 which injects a proper amount of fuel and ignites and burns the fuel. The combustion appliance 14 is provided with a fuel spray nozzle to inject a proper amount of fuel and an ignition plug to ignite the fuel injected through an injection port of the nozzle.

Connected to the combustion appliance 14 is a combustion air supply pipe 15 branched downstream from the compressor 2a of the turbocharger 2. The combustion air supply pipe 15 is adapted to extract part of the intake air 4 supercharged by the compressor 2a and guide the same as nebulizing air serving also as combustion air.

Fig. 2 shows details of a fuel spray nozzle 16 arranged in the combustion appliance 14. The nozzle 16 comprises a cylindrical spray block 18 which includes an internal air passage 17 for flow of part of the intake air 4 supercharged by the compressor 2a as nebulizing air 4', and a fuel injection valve 20 which injects fuel 19 intermediately of the air passage 17 in the spray block 18 with a flow rate adjusted by duty control. A passage sectional area of the air passage 17 is properly set such that the nebulizing air 4' is introduced through a base end of the spray block 18 at a flow velocity of 9 m/s or more and is blown out of an injection port 21 on the tip end.

With the fuel spray nozzle 16 being configured as described above, fine particles among particles of the fuel 19 injected through the fuel injection valve 20 are entrained in a flow of nebulizing air 4' immediately after the fuel injection and are blown out of the tip end of the spray block 18. On the other hand, large particles among the particles of the fuel 19 injected through the fuel injection valve 20 substantially collide against an inner wall of the air passage 17 and are atomized through diffusion, and even the large particles guided along the inner wall of the air passage 17 to the tip end of the spray block 18 are atomized through scattering such that the large particles are torn off by the flow of nebulizing air 4' at an edge of the injection port 21 on the tip end of the spray block 18.

Thus, in the flow injection control with the flow rate of the fuel 19 injected through the fuel injection valve 20 being adjusted by duty control for the turn-down ratio of 10 to 20 times, uniform fine spray becomes hard to attain and a mean particle diameter becomes increased when an injected amount of the injected fuel 19 is reduced to inject a small amount of fuel. Even in such situation, the function of collision against the inner wall of the air passage 17 into diffusion and the function of tear-off at the edge of the injection port 21 on the tip end of the spray block 18 into scattering facilitate atomization of the particles of the fuel 19, whereby uniform fine spray can be realized.

Actually, a result of experiments performed by the inventor verified as plotted in Fig. 3 that, even in a condition where a fuel flow rate is narrowed down such that an mean particle diameter becomes close to 100 µm (see Fig. 4) in a case of no nebulizing air 4' (air flow velocity of 0 m/s in the graph of Fig. 3), an mean particle diameter of the fuel 19 sprayed from the injection port 21 of the spray block 18 can be reduced to a sufficiently small particle diameter lower than 40 µm when the flow velocity of the nebulizing air 4' is set to 9 m/s or more.

Thus, according to the embodiment, a turn-down ratio of 10 to 20 times can be realized by employing duty control, so that a fuel flow rate can be controlled more finely and more accurately. Even though a flow rate and a temperature of the exhaust gas 9 change every second depending on operating states (rotating speeds or loads) of the diesel engine 1, an operating state of the diesel engine 1 can be followed by a combustion state of the combustion appliance 14 to reliably keep the bed temperature of the particulate filter 12 at about 600°C. In addition, since uniform fine spray can be realized even when a small amount of fuel 19 is injected, the combustibility and ignitability of the fuel can be substantially improved to prevent deterioration of fuel efficiency and emission of white smoke.

Furthermore, the configuration especially in the embodiment is such that part of the intake air 4 supercharged by the compressor 2a may be guided as the nebulizing air 4' also serving as combustion air, so that the nebulizing air can be provided by using the part of combustion air without securing a new supply source of nebulizing air 4', and the cost for practicing the invention can be substantially reduced.

It is to be understood that a fuel spray nozzle according to the invention is not limited to the above embodiment and that various changes and modifications may be made without departing from the scope of the invention. For example, the fuel spray nozzle is not limited to that arranged in a combustion appliance for regeneration of a particulate filter. Nebulizing air is not always that obtained by guiding part of intake air supercharged by the compressor and may be guided by arranging a dedicated blower.

### Reference Signs List

- 4': nebulizing air
- 16: fuel spray nozzle
- 17: air passage
- 18: spray block
- 19: fuel
- 20: fuel injection valve

## Claims

1. A fuel spray nozzle comprising a cylindrical spray block having an inner air passage for flow of nebulizing air and a fuel injection valve for injecting fuel intermediately of the inner air passage in said spray block at a flow rate adjusted by duty control, the nebulizing air being introduced into said spray block through a base end of the block at a flow velocity of 9 m/s or more and blown out of a tip end of the block.

2. The fuel spray nozzle as claimed in claim 1, wherein configuration is such that at least part of combustion air may be guided as nebulizing air.
